(19) **Europäisches Patentamt**

**European Patent Office**

**Office européen des brevets**

(11) **EP 0 848 872 B1**

(12) **EUROPÄISCHE PATENTSCHRIFT**

(45) Veröffentlichungstag und Bekanntmachung des Hinweises auf die Patenterteilung:
**22.03.2000 Patentblatt 2000/12**

(51) Int Cl.$^7$: **H04L 9/32**

(21) Anmeldenummer: **96931023.4**

(22) Anmeldetag: **04.09.1996**

(86) Internationale Anmeldenummer:
**PCT/EP96/03893**

(87) Internationale Veröffentlichungsnummer:
**WO 97/09802 (13.03.1997 Gazette 1997/12)**

(54) **VERFAHREN UND VORRICHTUNG ZUR VERSIEGELUNG VON COMPUTERDATEN**

METHOD AND DEVICE FOR THE SEALING OF COMPUTER DATA

PROCEDE ET DISPOSITIF POUR LE SCELLEMENT DE DONNEES INFORMATIQUES

(84) Benannte Vertragsstaaten:
**AT BE CH DE DK ES FI FR GB GR IE IT LI LU MC NL PT SE**

(30) Priorität: **04.09.1995 DE 19532617**

(43) Veröffentlichungstag der Anmeldung:
**24.06.1998 Patentblatt 1998/26**

(73) Patentinhaber: **Timesafe Trustcenter GmbH 90425 Nürnberg (DE)**

(72) Erfinder:
- **Nissl, Klaus**
  **80999 München (DE)**
- **Meinhold, Matthias**
  **90425 Nürnberg (DE)**
- **Günther, Hartmut**
  **90489 Nürnberg (DE)**

(74) Vertreter: **Meyer, Enno (DE)**
**Weser & Kollegen**
**Patentanwälte**
**Radeckestrasse 43**
**81245 München (DE)**

(56) Entgegenhaltungen:
**WO-A-92/03000          DE-A- 4 411 780**

- **ADVANCES IN CRYPTOLOGY - CRYPTO '87. PROCEEDINGS, SANTA BARBARA, CA, USA, 16-20 AUG. 1987, ISBN 3-540-18796-0, 1988, BERLIN, WEST GERMANY, SPRINGER-VERLAG, WEST GERMANY, Seiten 216-222, XP000130206 DAVIDA G I ET AL: "Arbitration in tamper proof systems. If DES approximately=RSA then what's the difference between true signature and arbitrated signature schemes?"**

## Beschreibung

Der elektronische Daten- und Informationsaustausch mittels Computer, Telefax, Telex und anderen entsprechenden Medien hat in den letzten Jahren einen gewaltigen Aufschwung erhalten. Der wachsende Einsatz der EDV auf allen Gebieten steht angesichts der Qualität und der Quantität des verarbeiteten Datenmaterials vor einer völlig neuen Dimension der geforderten Datensicherheit. Dies gilt insbesondere für die Datenfernübertragung (DFÜ), wie tägliche Presseberichte zeigen. Beispiele finden sich in Ärzte-Zeitung 14, Nr. 86, 11.05.95 "Internet ist für sensible Daten nicht geeignet" und PraxisComputer Nr. 1, 10. Februar 1995, S. 15 "Trau' keinem über Fax ..."

Die Forderung nach Datenversiegelung, Dokumentenechtheit und rechtsverbindlicher Kommunikation wird immer lauter. Es ist eine Frage der Zeit, bis der Gesetzgeber entsprechende Richtlinien erläßt. Der Wortlaut eines entsprechenden Interviews ist in Praxis-Computer Nr. 5, 10. August 1995, S. 36 "Knappe Ressourcen besser nutzen", Interview mit Dr. Winfried Schorre und Horst Seehofer, abgedruckt.

Einige der denkbaren Manipulationsmöglichkeiten werden im folgenden kurz aufgeführt, um die Sachlage zu verdeutlichen.

## Beispiel Medizin

Der Operateur erstellt postoperativ per Diktat, das anschließend von der Schreibkraft in den Computer eingegeben wird, den Operationsbericht. Nachträglich stellt sich heraus, daß der Operateur einen Fehler begangen hat, z.B. aufgrund einer zuvor diagnostizierten Linsentrübung Entfernung der Augenlinse, allerdings auf der falschen Seite. Nachträglich versucht der Operateur, den präoperativen Befund (Linsentrübung links) zu manipulieren (Linsentrübung rechts), um sich zu entlasten.

## Beispiel Finanzen

Transaktionen mit einem Wechselkurs zum Zeitpunkt t1 Zum Zeitpunkt t2 ist der Kurs gefallen, eine nachträgliche Manipulation soll in betrügerischer Weise den Verlust verhindern

## Beispiel Forschung

Wer hat eine Erfindung zuerst dokumentiert?

## Beispiel Rechtswesen

Protokollerstellung bei der Beweisaufnahme, bei deren Verwendung vor Gericht Dokumentenechtheit gefordert wird.

## Beispiel Datenaustausch

Der Entlassungsbrief eines Psychiatrie-Patienten soll per Modem an den Hausarzt gesendet werden. Die Authentizität des Empfängers muß sichergestellt und eine unbefugte Einsichtnahme in die vertraulichen Unterlagen verhindert werden. Siehe auch in PraxisComputer Nr. 6, 15. Oktober 1994, S. 5: "Schweigepflicht und Datennetze".

Die Physikalisch Technische Bundesanstalt in Braunschweig sendet die durch eine Cäsiumuhr ermittelte Uhrzeit mittels Funkwellen von Mainflingen aus Das Signal kann im Umkreis von 1500 - 2000 km empfangen werden. Näheres unter ELV-Journal 6/94, S.27 ff "DCF Empfangstechnik".

Die Empfängermodule für Funkuhrsignale besitzen ein hohes technisches Niveau (wie in Design&Elektronik 10, 16.05.95, Kennziffer 242 "Industrie-Uhren im Atomzeitalter" näher erläutert) und liefern jede Minute die komplette Datum- /Uhrzeitinformation, im folgenden als Normalzeit bezeichnet.

Auch im Ausland existieren Zeitzeichensignale wie zum Beispiel MSF (England) und WWVR (USA), ferner ist das Zeitsignal in GPS ( globales Positionsbestimmungssystem, s.u.) enthalten.

Seit es Informationen gibt, besteht der Wunsch, diese durch Verschlüsselung vor dem allgemeinen Zugriff zu schützen. Die Sicherheit des eingesetzten Schlüssels korreliert mit der Güte des Schlüsselalgorithmus.

Zur Geheimhaltung vertraulicher Daten stehen verschiedene Verschlüsselungsverfahren zur Verfügung, die entsprechend dem Aufwand eine mehr oder weniger große Datensicherheit bieten. Prinzipiell unterscheidet man zwischen symmetrischen (Kryptoverfahren nach Feal, DES u.a.) und asymmetrischen Verfahren (RSA, PGP u.a.).

Verschiedene Unternehmungen in Richtung Dokumentenechtheit und rechtsverbindlicher Kommunikation haben bislang keine befriedigende Lösung erbracht. Die Gleichstellung der digitalen Signatur mit der eigenhändigen Unterschrift ist Gegenstand intensiver Forschung, wie in c't Magazin 1995, Heft 6, S. 46 "Krypto-Neid" und in Design&Elektronik 14/15, 18.07.95, Kennziffer 212 "Single-Chip-Controller für Kryptokarten" ausgeführt. Gegenüber der alleinigen Verschlüsselung bietet die digitale Signatur vielfältige Vorteile (Glade, A., Reimer, H., Struif, B.: Digitale Signatur und sicherheitssensitive Anwendungen, Wiesbaden 1995).

Die nachträgliche Manipulierbarkeit von EDV-Daten stellt ein bislang ungelöstes Problem dar. Zum Dokument im juristischen Sinne wird eine Datei erst durch ihren Ausdruck, der mit Datum und Unterschrift versehen werden muß. Angesichts der Datenfülle und der Geschwindigkeit ihrer Erzeugung und Vernichtung (Datenturnover) stößt dieses Verfahren an die Grenzen des Machbaren.

Der wachsende Datenaustausch per Computer, Telefax und anderen Medien sowie die permanent steigende Anzahl von Vernetzungen auf nationaler und internationaler Ebene (Internet u.a., siehe auch in der Ärzte-Zeitung 14, Nr. 86, 11.05.95 "Internet ist für sensible Daten nicht geeignet") erfordern adäquate Maßnahmen zur Datensicherheit. Näheres in Praxis-Computer Nr. 1, 10. Februar 1995, S. 15 "Trau' keinem über Fax...." und c't Magazin 1994, Heft 8, S. 230 ff:: "Datenschlösser, Grundlagen der Kryptologie") WO-A-92/03 000 offenbart ein System zum Zeitstempeln eines digitalen Dokuments. Dabei präpariert ein Autor ein digitales Dokument und sendet es in einer ersten Ausführungsform zu einer Zeitstempelinstitution (Authority , TSA). Dort wird das Dokument zeitgestempelt, d.h. es werden dem Dokument digitale Daten zugefügt, die die Zeit repräsentieren, und die Institution fügt noch ihre Signatur zu, um beispielsweise die Richtigkeit oder Echtheit der Zeitstempelung zu dokumentieren. Dann wird das mit der Zeitstempelung und der Signatur versehene Dokument an den Autor zurückgesendet, der damit später einen Beweis der Existenz des ursprünglichen Dokuments führen kann. Um eine spätere Manipulation an dem Dokument zu verhindern, kann das Dokument vor dem Senden an die TSA mittels beispielsweise einer Hashfunktion komprimiert werden, wobei die Hashkompression anstelle des Dokuments bei der Institution zeitgestempelt und signiert wird. Eine zweite Ausführungsform unterscheidet sich von der ersten dadurch, daß anstelle der Institution ein Netz oder eine "Welt" von Autoren verwendet wird, die sich gegenseitig nach einem Zufallsprinzip die Zeitstempelung und Signierung auf die versendeten Dokumente erteilen. Die Institution TSA bzw. die Autorenwelt benutzt als Zeit die "Computer clock time", d.h. die manipulierbare interne Uhr des mit der Zeitstempelung befaßten Computers.

Der Artikel von Davida et al.: "Arbitration in Tamper Proof Systems", Advances in Cryptologie-Crypto 87 Proceedings, Santa Barbara, CA, USA, 16-20. Aug. 1987, ISBN 3-540-18796-0, 1988, Berlin, West-Germany, Springer Verlag, Seiten 216-222, beschreibt verschiedene Verfahren zum Erzeugen von manipulationssicheren Systemen, so unter anderem digitale Signatursysteme, Systeme mit öffentlichen Schlüsseln und Notarsysteme, die eine Zeitstempelung beinhalten. So wird eine Nachricht unter Verwendung einer Vorrichtung verschlüsselt. Dabei wird in der Vorrichtung eine Nachrichtennummer mc und ein Zeitstempel ts an die Nachricht angehängt und verschlüsselt. Aus dem Ergebnis, dh. der Nachricht plus der Nummer mc plus dem Zeitstempel ts, wird eine verschlüsselte Hashfunktion ha generiert. Allerdings wird keine Aussage über die verwendete Zeit getroffen.

Nachteilig bei den obigen bekannten Verfahren und Systemen ist die Tatsache, daß keines der Verfahren eine sichere Zeit gewährleisten kann, so daß eine Manipulationsmöglichkeit hinsichtlich der verwendeten Zeit nicht gewährleistet ist.

Der Erfindung liegt daher die Aufgabe zugrunde, ein Verfahren und eine Vorrichtung zum Erstellen eines Zeitstempels bzw. zum Versiegeln von digitalen Daten zu schaffen, wobei die für die Zeitstempelung benötigte Zeit eine geringe Manipulationsmöglichkeit aufweist.

Die Aufgabe wird durch die Merkmale der Verfahrensansprüche 1 und 2 sowie der Vorrichtungsansprüche 11 und 12 gelöst. Bevorzugte Ausgestaltungen der Erfindung sind Gegenstand der Unteransprüche.

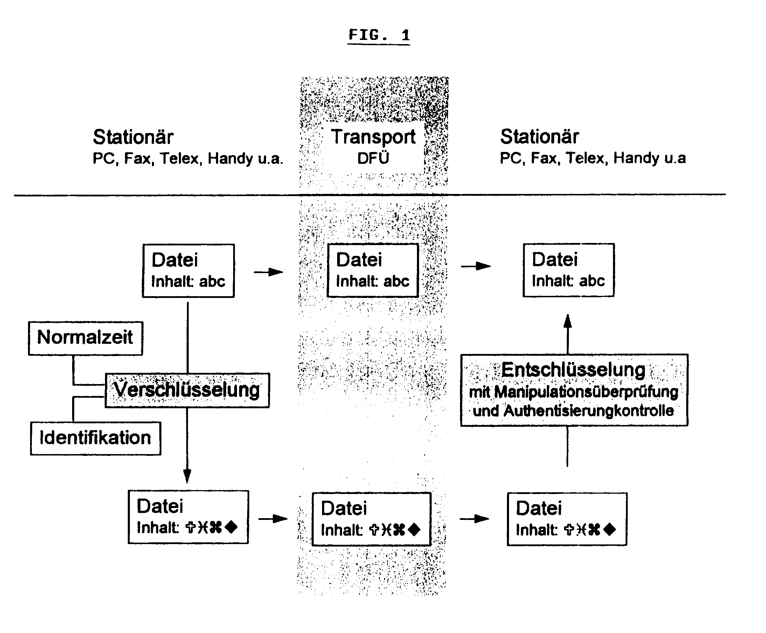

Das hier beschriebene Verfahren und die Vorrichtung bewirken, daß der Zugriff auf die so versiegelten Daten in der Regel verwehrt bleibt und stellen damit einen wesentlichen Schritt in Richtung Dokumentenechtheit und rechtsverbindlicher Kommunikation dar (s. Fig. 1 Datenflußschema).

Für den Datentransport bedeutet dies, daß die Authentizität von Sender und Empfänger gewährleistet und eine unbefugte Einsicht in die versandten Daten durch die gleichzeitige Verschlüsselung verhindert wird.

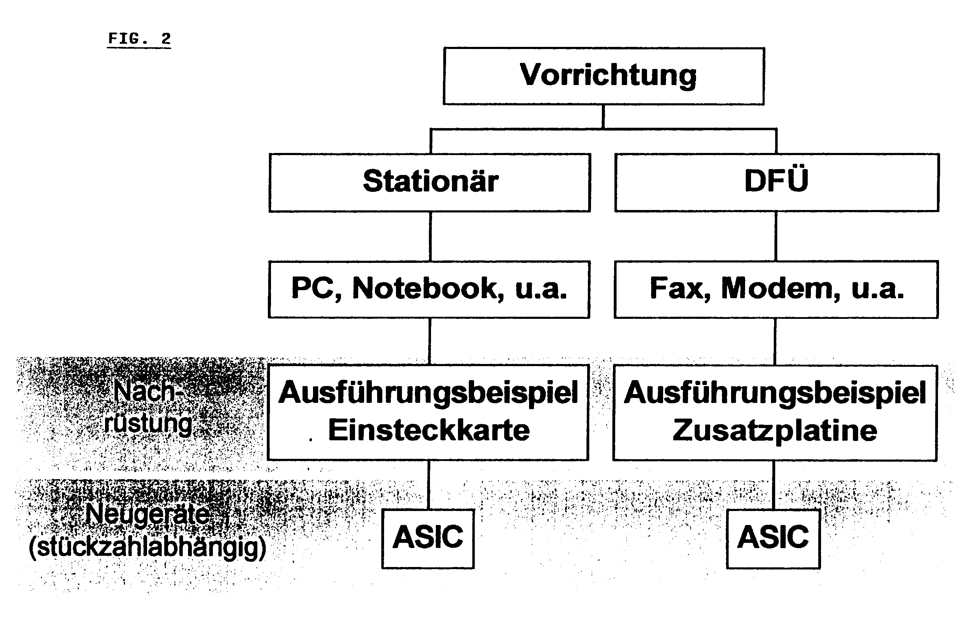

Das Verfahrens und die Vorrichtung zur Versiegelung von Computerdaten mittels Kombination aus Normalzeiteinbindung, Authentisierung und Verschlüsselung schützt die so versiegelten Daten vor unberechtigtem Zugriff bzw. Manipulation, sowohl im stationären EDV-Bereich (Ausführungsbeispiel PC-Einsteckkarte) als auch bei der Datenfernübertragung (Ausführungsbeispiel Zusatzplatine). Siehe, Fig. 2: Vorrichtung zur Datenversiegelung.

Auf der PC-Ebene wird zur Nachrüstung eine Einsteckkarte, für die DFÜ-Geräte eine Zusatzplatine favorisiert. Selbstverständlich ist es ein Bestreben der Technik, derartige Schaltungen zu miniaturisieren und auf möglichst kleinem Raum zusammenzufassen. Vor allem bei Neugeräten läßt sich stückzahlabhängig auch eine anwenderspezifische IC- (ASIC)-Lösung realisieren. Eine Ankopplung der erfindungsgemäßen Vorrichtung an den PC (d.h. Computer allgemein) kann auch über eine beliebige Schnittstelle (seriell, parallel, PCMCIA Adapter) erfolgen.

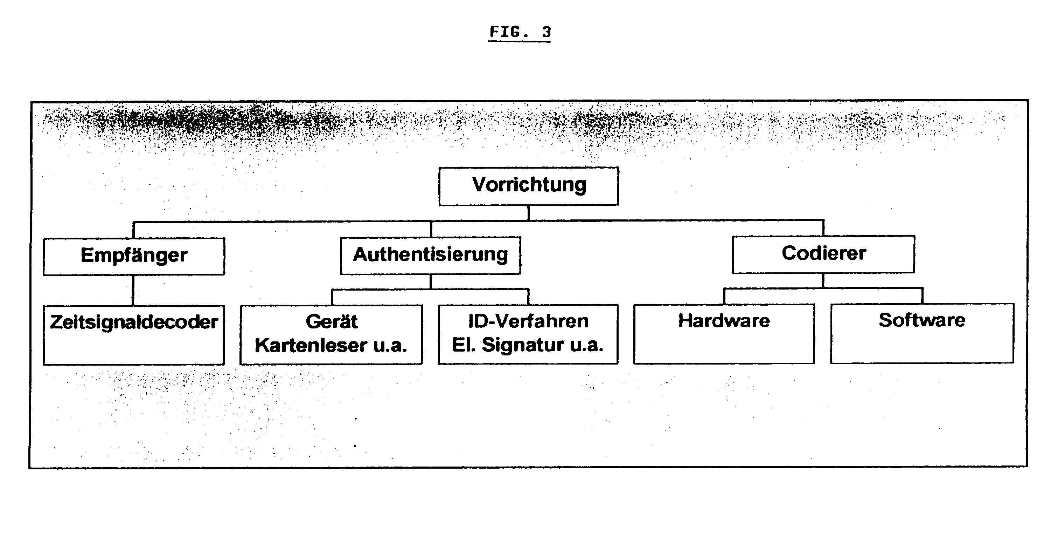

Die Komponenten der Vorrichtung und des Verfahrens zeigt Fig. 3

Die Vorrichtung besteht aus elektronischen Bausteinen, die folgende Aufgaben zu erfüllen haben:

- Signalauswertung
- Signalüberprüfung
- Bereitstellung der Identifikationsnummer der Vorrichtung
- Verschlüsselung des empfangenen Signals
- Manipulationskontrolle

Vorhandene Sender:

Der Sender stellt die Datums- und Uhrzeitinformation bereit. Neben den Zeitzeichensendern kommen auch andere Signalträger wie Satellit, TV-Kabel, Telefon, TV-Sender u.a in Frage. Außerdem kann sogenannten Providern (z.B. Telekom) die Möglichkeit zur Signalvergabe bzw. Einbindung eingeräumt werden.

Eigens konstruierte Sender

Ein eigens konstruierter Sender erhöht die Datensicherheit durch folgende Faktoren:

> 1 Bereitstellung der Normalzeit in verschlüsselter Form.
> 2. Variabilität des Sendezeitpunkts.
> 3 Durchmischung von echter und falscher Information.
> 4. Sender- Empfangersynchronisation mit begrenzter Gültigkeitsdauer.
> 5. Mischung der Information von 1 - 4.
> 6. Bidirektionales Signal zur Signalübermittlung.

Die Beschaffenheit des Empfängers hängt von der des Senders ab. Prinzipiell können Funk- und Kabelsignale empfangen werden. Eine entsprechende Logik wertet die empfangenen Signale aus.

Die Überprüfung der Echtheit geschieht bei dem Funkuhrsignal mangels spezifischer zusätzlicher Signale über das Aufwärtszählen des Zeitimpulses, d. h. bei etwaiger Manipulation werden datumsältere Eingaben als das zuletzt abgefragte unverfälschte Datumszeitsignal als Manipulation erkannt. Zusätzlich wird das empfangene Signal mit einer internen Uhr (RTC, Real Time Clock) abgeglichen, wobei Zeitdifferenzen außerhalb eines Kontrollbereiches auf Manipulation hindeuten.

Die Authentisierung erfolgt über ein Gerät und/ oder ein Verfahren, daß die Identität des Senders bzw. des Empfängers einer Nachricht zweifelsfrei festlegt. Die elektronische Signatur ist derzeit Gegenstand der Forschung (siehe in Design&Elektronik 14/15, 18.07.95, Kennziffer 212 "Single-Chip-Controller für Kryptokarten"). Es eignen sich auch andere Geräte und Verfahren (Kartenleser, Fingerprint-Reader, und Transpondersysteme wie in Design&Elektronik, Kennziffer 283 "Berührungslose Identifikation" beschrieben, u.a.) zum Nachweis der Authentisierung.

Die Modifikation des Zeitsignals geschieht mittels Hardware (GAL, PAL und/oder andere Hardware-Verschlüsselungsverfahren wie den Clipper-Chip, der in c't Magazin 1994, Heft 8, S. 24 "Die NSA und der Clipper-Chip" erläutert ist) und/oder mittels Software (Verschlüsselungsalgorithmus, z.B. nach dem RSA-Verfahren, näheres dazu in c't Magazin 1994, Heft 8, S. 230 ff: "Datenschlösser, Grundlagen der Kryptologie". Eine Entschlüsselung kann nur von der Person erfolgen, die den Schlüssel zu der Modifikationslogik besitzt.

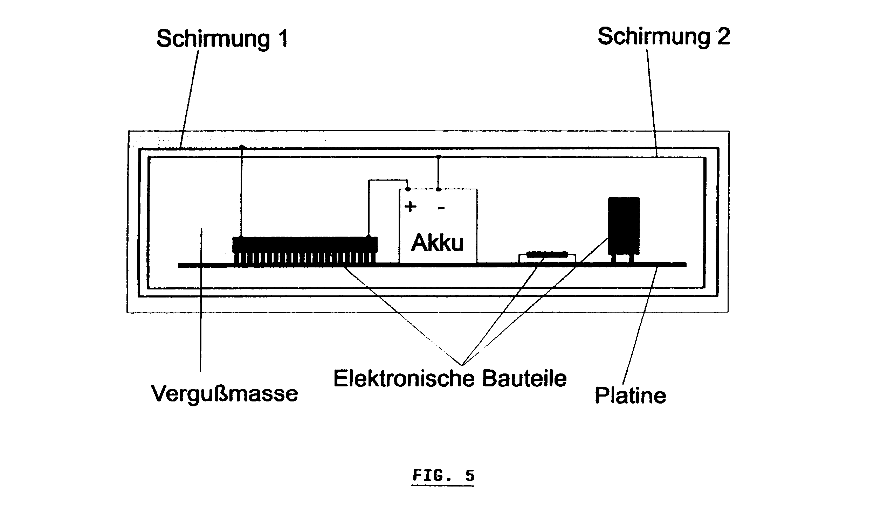

Zur Verhütung einer mechanischen Manipulation werden der Chip bzw. die entsprechenden Komponenten der Einsteckkarte eingegossen und mit einer elektromechanischen Koppelungstechnik versehen, sodaß ein nachträgliches Auslesen von Microprozessor-Elementen erschwert wird . Wie aus Fig. 5 hervorgeht, hat der Kontakt der Schirmung 1 und 2 das Löschen der programmierten Bauteile zur Folge, sog. Blackbox-Lösung.

Eine Datenmanipulation wird durch die Paritätsprüfung und andere mathematische und/oder Hardware-Prüfverfahren erkannt. Die Sicherheit steigt mit der Komplexität der Prüfverfahren.

In Amerika haben unabhängige Einrichtungen für den Datenschutz sogenannte "Trust Center" eingerichtet, um als außenstehende dritte Partei eine Vertrauensfunktion im Datenschutz zu übernehmen. Dies betrifft die Ver- und Entschlüsselung, die Vergabe und das Aufbewahren von Schlüsseln sowie die Kooperation mit Providern und entsprechenden Notariaten zur neutralen Beglaubigung von Kommunikationsschlüsseln, u.a. Näheres findet sich in Praxis Computer Nr. 2, 10. März 95, S.16/17; "Mit Chipkarten ist vieles möglich".

Ein Dokument enthält neben der Identifikation (z.B. Unterschrift), dem Datum und ggf der Zeit auch den Ort der Dokumentenerstellung. Über Satellitenortung (GPS, globales Positionsbestimmungssystem) läßt sich dieser Ort hinreichend identifizieren und in das Dokument genauso einbinden wie z.B. die Normalzeit.

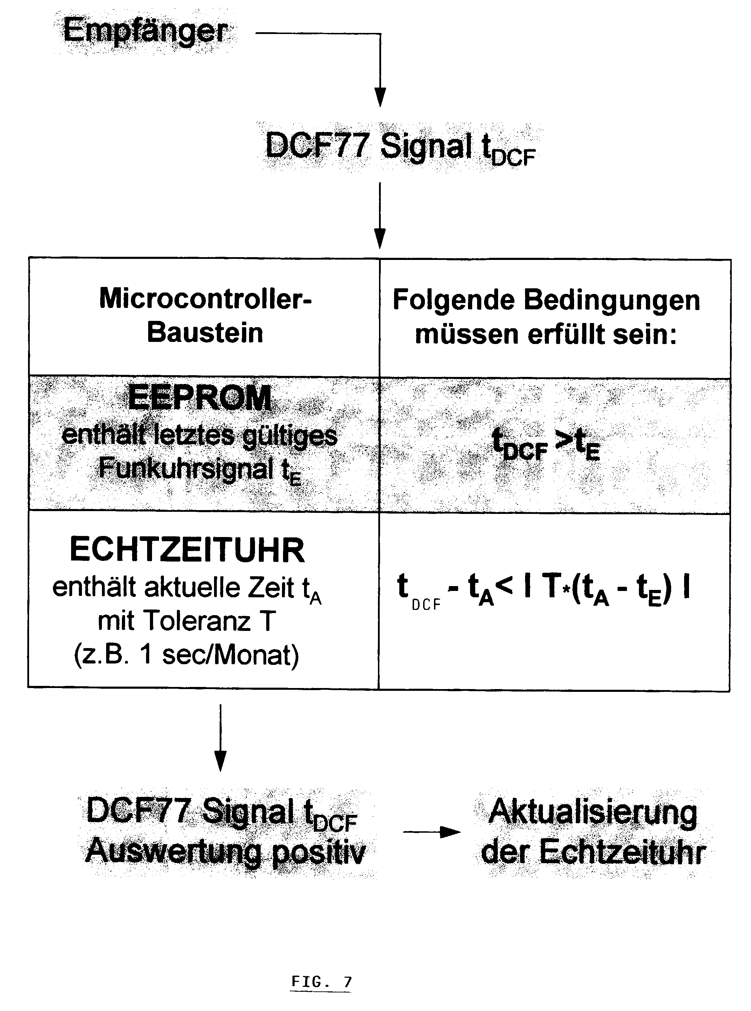

Wird die Vorrichtung als eine PC-Einsteckkarte ausgeführt, so übernimmt das Funkuhrsignal DCF 77 der Physikalisch Technischen Bundesanstalt in Braunschweig die Rolle des Senders Empfänger für Zeitsignale gibt es in verschiedenen Ausführungen (Größe, Empfangscharakteristik). Das empfangene Signal wird demoduliert und verstärkt als ein 100 ms bzw. ein 200 ms Impuls pro Sekunde an die PC-Einsteckkarte zur Auswertung weitergegeben Ein Microcontroller auf der Einsteckkarte setzt die empfangenen Signalimpulse in eine Zeitinformation um und speichert über eine spezielle Logik, die individuell auf jede Einsteckkarte zugeschnitten ist, die zuletzt empfangene Zeit ab. Die Validierung des DCF-77 Signals zeigt Fig. 7.

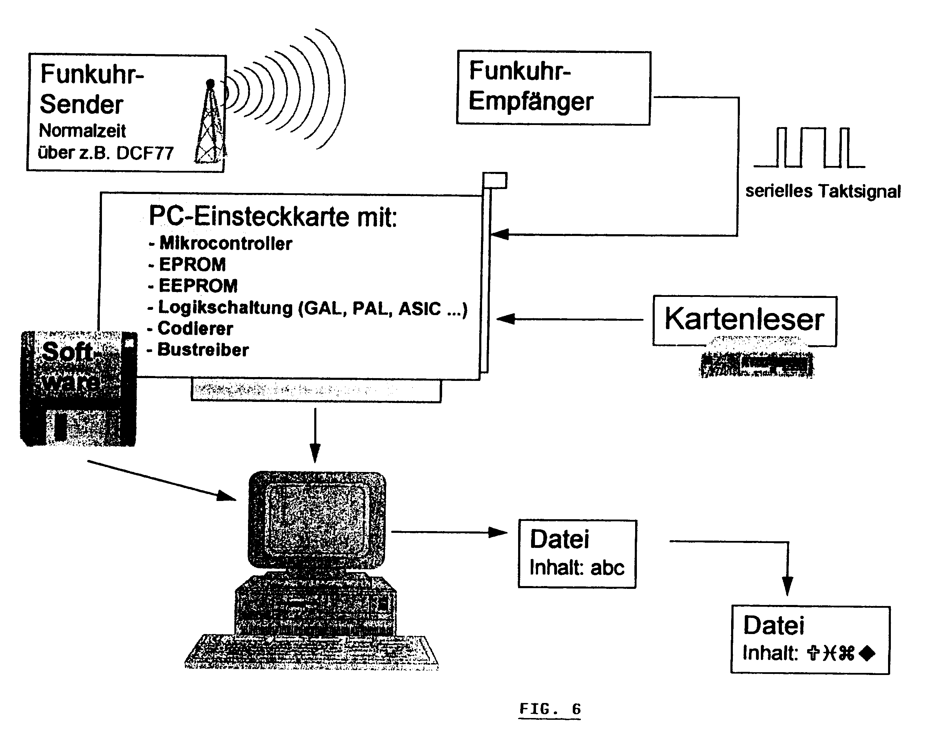

Jede Einsteckkarte ist mit einer individuellen Identifikationsnummer versehen. Hard- und Software verwenden diese Nummer zur Maschinenidentifizierung. Die Bausteine für den Empfang, die Authentisierung und Verschlüsselung brauchen, wie das Ausführungsbeispiel Einsteckkarte am PC in Fig. 6 zeigt, nicht notwendigerweise alle auf der Karte selbst angeordnet zu sein.

Das von der Originaldatei mittels eines Signaturverfahrens (z.B. MD5, Message Digest 5 von Ron Rivest, o.ä.) erzeugte Signal wird mit einem Header (Information über die beteiligten Größen wie Betriebssystemversion, Dateigröße, u.a.) versehen und mit einem definierten Teil der Originaldatei selbst zu einem Block geformt, der im vorliegenden Fall eine Größe von 4kByte einnimmt (sogenannter 4kBlock).

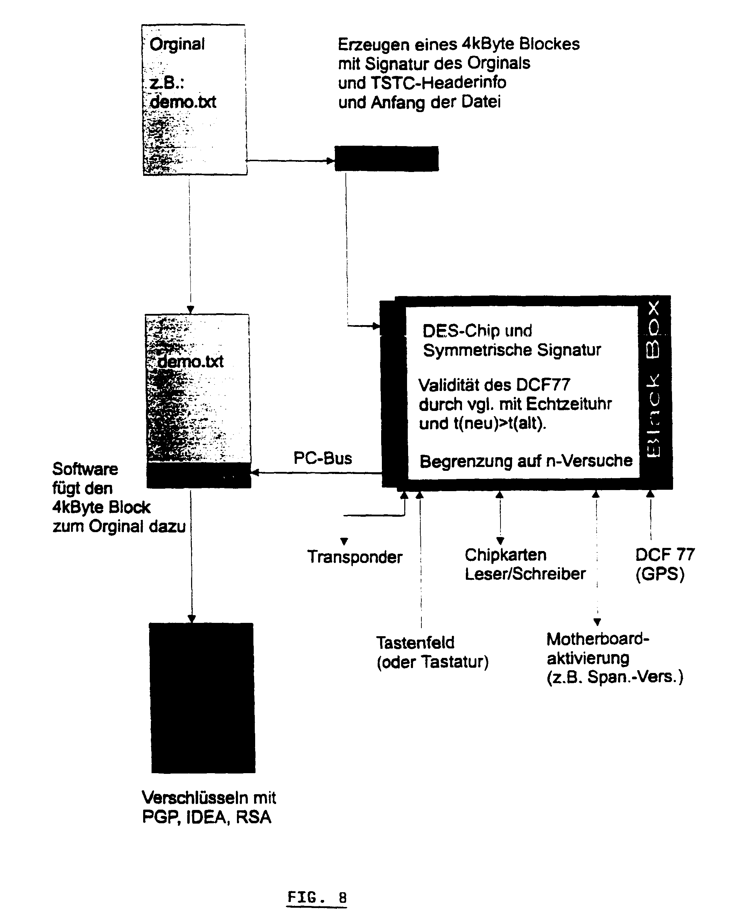

Die Microcontroller-Software greift auf das Zeitsignal zu, baut es in den 4kBlock ein, verschlüsselt diesen in der Blackbox und hängt die zeitgestempelte digitale Signatur an die Orignaldatei an. Optional kann diese auch separat gespeichert oder zusammen mit der Originaldatei erneut verschlüsselt werden. (s. Fig. 8).

Die Entschlüsselung kann nur über den Schlüsselinhaber erfolgen. Dabei wird eine Überprüfung auf nachträgliche Manipulation durch die Signaturüberprüfung durchgeführt.

Wird die erfindungsgemäße Vorrichtung als Zusatzkarte ausgeführt, so entsprechen die Voraussetzungen für Sender und Empfänger der Realisierung der Vorrichtung als PC-Einsteckkarte (s.o.).

Im Bereich der DFÜ kommt neben der Dokumentenechtheit der Datensicherung beim Transport eine entscheidende Rolle zu Vor dem Versand werden die Daten unter Einbindung des Zeitsignals wie beschrieben verschlüsselt. Ver- und Entschlüsselung erfolgen durch Logik-Bausteine, die entsprechend den Randbedingungen der DFÜ-Geräte auf kleinstem Raum integriert sein müssen Die Verschlüsselungs-Software wird z.B. im EPROM abgelegt, die Verschlüsselungs-Hardware kann zum Beispiel aus einem Clipper-Chip bestehen.

Neben den o.a. Sicherheitsvorkehrungen schafft das Zeitsignal durch die Festlegung des Sende- und Empfangszeitpunkts wahrer und falscher Information weitere Hürden gegen unbefugte Einsichtnahme und/oder Manipulation.

Eine bevorzugte Ausführungsform ist nachfolgend anhand der beigefügten Zeichnungen beschrieben, in denen

Fig. 1 ein Datenflußschema der Kommunikation einer versiegelten Datei zeigt,

Fig. 2 ein Schemabild einer erfindungsgemäßen Vorrichtung zur Datenversiegelung zeigt,

Fig. 3 die Komponenten der Vorrichtung nach Fig. 2 zeigt,

Fig. 4 mögliche Sender zur Distribution des verwendeten Zeitsignals zeigt,

Fig. 5 eine Schutzvorrichtung gegen unbefugtes Auslesen der programmierten Bauteile der erfindungsgemäßen Vorrichtung zeigt,

Fig. 6 ein Schemabild des erfindungsgemäßen Verfahrens zeigt, wobei die erfindungsgemäßen Vorrichtung als Einsteckkarte eines PCs realisiert ist,

Fig. 7 ein Blockdiagramm der Validierung eines externen Zeitsignals, beispielsweise eines DCF77 Signals, sowie der nachfolgenden Aktualisierung der Echtzeituhr zeigt,

Fig. 8 ein Blockdiagramm der Einbindung der Normalzeit beim Verschlüsseln zeigt, und

Fig. 9 ein Schemabild des Verfahrens und der Vorrichtung zur Versiegelung von Computerdaten zeigt.

Fig. 1 zeigt das Datenflußschema einer Datei, die senderseitig verschlüsselt, übertragen und empfängerseitig wieder entschlüsselt wird, wobei zur Verschlüsselung der Daten ein Signal eingebunden wird, das die Normalzeit einer externen Quelle und einen Authentisierungscode enthält. Auf der Senderseite liegt eine Datei des Inhalts abc beispielsweise in einem PC, einem Fax, Telex, Handy oder dergleichen vor. Diese Datei kann über eine Transportebene, beispielsweise Datenfernübertragung (DFÜ) zur Empfängerseite übertragen werden. In diesem Fall ist der Inhalt der Datei manipulierbar. Die Empfängerseite umfaßt gleiche Komponenten wie die Senderseite, nämlich PC, Fax, Telex, Handy, oder dergleichen. Um nachträgliche Manipulationen der Datei ausschließen zu können und damit eine Dokumentenechtheit zu erzielen, wird die senderseitige Datei des Inhalts abc einer Verschlüsselung unterzogen, wobei in die Verschlüsselung validiert eine Normalzeit (extern) und eine Identifikation eingebunden wird. Die so verschlüsselte Datei mit einem nicht lesbaren Inhalt wird über die Transportebene zum Empfänger übertragen. Empfängerseitig wird die übertragene, verschlüsselte Datei durch einen Schlüsselbesitzer entschlüsselt, wobei eine Manipulationsüberprüfung und eine Authentisierungskontrolle stattfindet. Anschließend liegt die Datei wieder in der lesbaren Form mit dem Inhalt abc vor.

Fig. 2 zeigt ein Diagramm möglicher Ausführungsformen der erfindungsgemäßen Vorrichtung zur Versiegelung von Computerdaten. Im Fall einer stationären Verwendung der Vorrichtung, beispielsweise in einem PC, einem Notebook oder dergleichen kann die Vorrichtung in der Form einer Einsteckkarte ausgeführt werden, falls das stationäre Gerät nachgerüstet wird Im Fall eines Neugerätes oder einer Erstausrüstung kann die erfindungsgemäße Vorrichtung durch einen integrierten Schaltkreis, beispielsweise durch ein ASIC, realisiert werden Wird die erfindungsgemäße Vorrichtung nichtstationär, d.h. in der Datenfernübertragung, beispielsweise in einem Fax, einem Modem oder dergleichen, verwendet, so kann im Fall einer Nachrüstung dies beispielsweise durch eine Zusatzplatine erfolgen. Bei einem Neugerät wird die Vorrichtung wie im stationären Fall durch einen integrierten Schaltkreis, beispielsweise einem ASIC, realisiert.

Fig. 3 zeigt ein schematisches Strukturdiagramm der erfindungsgemäßen Vorrichtung, bestehend aus den übergeordneten Komponenten Empfänger, Authentisierung und Codierer.

Der Empfänger empfängt Datum- und Uhrzeitinformation. Weiterhin ist es möglich eine Ortsinformation, die beispielsweise aus einem GPS-Signal stammen kann, ebenfalls einzubinden Diese Information wird decodiert, wobei in der vorliegenden Ausführungsform zur Verdeutlichung beispielhaft ein Zeitsignaldecoder angegeben ist. Als Sender der Datum-,Zeit- und/ oder Ortsinformation kommen die im vorangegangenen bereits aufgeführten Quellen einschließlich eines eigens zu diesem Zweck konstruierten Senders in Betracht.

Die Authentisierung legt die Identität des Senders bzw. Empfängers der Nachricht/Datei fest. Dies kann beispielsweise mittels eines Kartenlesers erfolgen. Ferner kann die Authentisierung mittels eines Identitätsverfahren, wie einer elektronischen Signatur, erfolgen.

Die Verschlüsselung der Vorrichtung kann über eine entsprechende Hardware, beispielsweise einem Clipperchip, oder einer geeigneten Software, d. h. einen entsprecheden Verschlüsselungsalgorithmus, erfolgen.

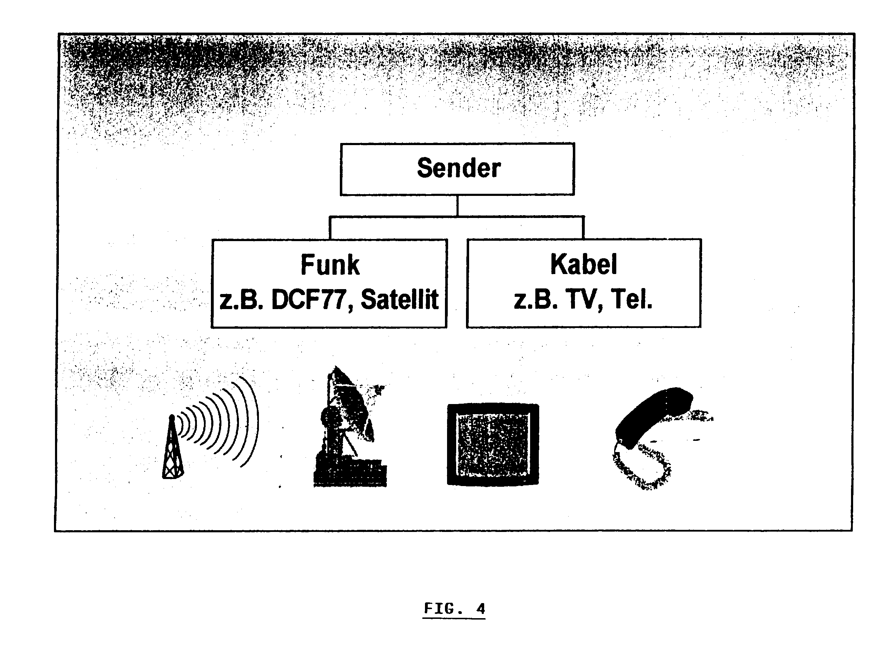

Fig. 4 zeigt eine nicht vollständige Übersicht über mögliche Sender eines geeigneten Zeitsignals. Das notwendige Zeitsignal kann über Funk, beispielsweise als DCF77-Signal der Physikalisch Technischen Bundesanstalt Braunschweig, oder über Satellit gesendet werden Eine Übertragung des Zeitsignals über Kabel innerhalb eines TV-Signals oder Telefonsignals ist ebenfalls möglich.

Fig. 5 zeigt eine Schutzvorrichtung gegen unbefugtes Auslesen oder Manipulieren der programmierten Bauteile einer erfindungsgemäßen Vorrichtung. Die dargestellte sog Blackbox-Lösung umfaßt zwei als erste und zweite Schirmung ausgebildete Schutzgitter, die die erfindunggemäße Vorrichtung umgeben, wobei die auf einer Platine angeordneten elektronischen Bauteile und die Schirmungen in einer Vergußmasse eingegossen sind. Ferner ist ein Akkumulator in der Vorrichtung angeordnet, dessen Potential mit den Schirmungen und den programmierten Bauteilen so verbunden ist, daß eine Kontaktierung (Kurzschluß) der beiden Schirmungen miteinander beispielsweise ein Löschen oder Zerstören der verbundenen Bauteile zur Folge hätte.

Fig. 6 zeigt eine Ausführung des erfindungsgemäßen Verfahrens bzw der Vorrichtung als Einsteckkarte in einem PC und die notwendigen Funktionsteile Ein Funkuhrsender sendet beispielsweise (Bundesrepublik Deutschland) die Normalzeit als DCF77-Signal.

Ein geeigneter Funkuhrempfänger wandelt diese Signale in ein serielles Taktsignal, das in die als PC-Karte realisierte erfindungsgemäße Vorrichtung gegeben wird. Die PC-Einsteckkarte umfaßt einen Microcontroller, ein EPROM, ein EEPROM, Logikschaltungen, beispielsweise GALs, PALs, ASICs oder dergleichen, einen Codierer und einen Bustreiber. Weiter wird über einen Kartenleser eine entsprechende Signatur eingegeben. Mittels einer Software und der Einsteckkarte wird in dem PC die Datei des Inhalts "abc" verschlüsselt, zeitgestempelt und signiert, so daß sich die zu übertragende Datei mit dem entsprechend verschlüsselten Inhalt ergibt.

Fig. 7 zeigt die Validierung des empfangenen Zeitsignals in dem Microcontroller der Fig 6 Der Empfängerbausteil liefert ein DCF77-Signal tocF an den Microcontroller. Das EEPROM der Vorrichtung enthält das zuletzt gültige Zeitsignal $t_E$, wobei die Bedingung $t_{DCF} > t_E$ erfüllt sein muß. Eine in der erfindungsgemäßen Vorrichtung angeordnete Echtzeituhr, die als eigenständiger Baustein oder mittels des Microcontrollers realisiert sein kann, enthält die aktuelle Zeit $t_A$ mit einer Toleranz T, die beispielsweise 1 sec/Monat betragen kann. Es wird der Vergleich $t_{DCF} - t_A < |\, T\, (t_A - t_E)|$ durchgeführt. Ist der Vergleich positiv, so wird das DCF77-Signal zur Zeitstempelung verwendet und die Echtzeit aktualisiert

Fig. 8 zeigt schematisch die Einbindung der Normalzeit beim Verschlüsseln. Von einer Originaldatei "demo txt" wird ein Signat mittels eines Signaturverfahrens erzeugt und mit einem Header versehen. Mit einem definierten Teil der Originaldatei wird daraus ein sog. 4kByte Block "4kblock.sta" erzeugt. In der Blackbox greift der Microcontroller auf das Zeitsignal DCF77 (oder GPS) zu und führt die in der Fig. 7 beschriebene Validierung des DCF77-Signals durch. Der Vorgang ist auf n-Versuche begrenzt. Das validierte Zeitsignal wird in den 4kByte Block eingebaut und in der Blackbox verschlüsselt. Der verschlüsselte 4kByte Block "4kblock. tst", d.h. die sog. zeitgestempelte digitale Signatur, wird mittels einer Software und über den PC-Bus an die Originaldatei "demo.txt" angehängt . Optional kann die Kombination der Originaldatei "demo.txt" und der Signatur "4kblock.tst" separat gespeichert oder zusammen erneut zu einer Datei "demo.tsc" verschlüsselt werden. Weitere Ein-/Ausgänge der Blackbox sind Motherboardaktivierung, Chipkarten Leser/Schreiber und Transponder.

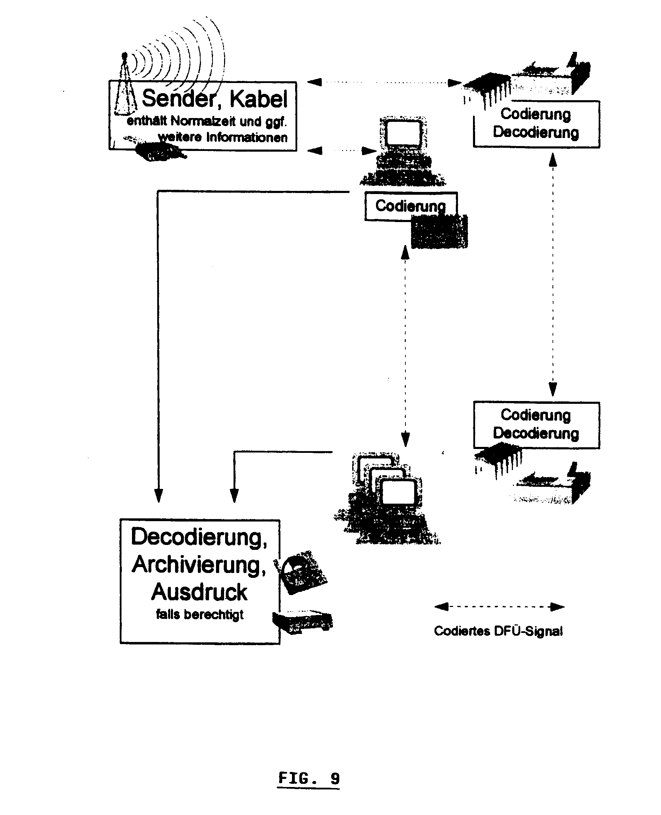

Fig. 9 zeigt einen Gesamtüberblick über das Verfahren und die Vorrichtung zur Versiegelung von Computerdaten, sowohl für den "stationären" Betrieb als auch für die "DFÜ"-Anwendung. Die Normalzeit (und gegebenenfalls weitere Informationen) wird mittels eines Zeitsenders oder Kabels einem Sende-PC oder Sende-DFÜ, zb. Faxgerät, zugeführt, die die Codierung/ Decodierung einer entsprechenden Information (Datei) durchführen. Mittels einer Datenfernübertragung wird die verschlüsselte Datei übertragen (gestrichelte Linien bedeuten ein codiertes DFÜ-Signal). Der jeweilige Sende-PC, bzw das Sender-Fax, ist mit einem entsprechenden Empfangs-PC bzw. Empfangs-Fax über einen entsprechenden DFÜ-Weg verbunden. Die Sende-/Empfangsfunktion kann gegenenfalls vertauscht sein. Sowohl sende- als auch empfangsseitig kann eine Dekodierung, eine Archivierung oder ein Ausdruck erfolgen, falls eine Berechtigung vorliegt.

**Patentansprüche**

1. Verfahren zum Erstellen eines Zeitstempels für digitale Daten, das die folgenden Schritte aufweist:

a) Empfangen und Auswerten eines externen Funk- oder Kabelsignals einer externen Zeitquelle, aus dem sich die Normalzeit $t_{DCF}$ ableiten läßt,

b) Vergleichen der in a) ermittelten Normalzeit $t_{DCF}$ mit einem internen aktuellen Zeitsignal $t_A$ einer internen Uhr,

c) Zeitstempeln der digitalen Daten, falls die Zeitdifferenz zwischen internem und externem Zeitsignal innerhalb eines vorgegebenen Toleranzbereichs liegt,

- wobei das zuletzt gültige Normalzeitsignal $t_E$ der Ungleichung

$$t_{DCF} > t_E$$

genügen muß, und

- wobei für den Vergleich der aktuellen externen Normalzeit $t_{DCF}$ mit der internen aktuellen Zeit $t_A$ die folgende Ungleichung gelten muß:

$$t_{DCF} - t_A < |T * (t_A - t_E)|,$$

wobei T die Toleranz der internen Uhr bedeutet.

2. Verfahren zum Versiegeln digitaler Daten, das die folgenden Schritte aufweist:

a) Empfangen und Auswerten eines externen Funk- oder Kabelsignals einer externen Zeitquelle, aus dem sich die Normalzeit $t_{DCF}$ ableiten läßt,

b) Vergleichen der in a) ermittelten Normalzeit $t_{DCF}$ mit einem internen aktuellen Zeitsignal $t_A$ einer internen Uhr,

c) Zeitstempeln der digitalen Daten, falls die Zeitdifferenz zwischen internem und externem Zeitsignal innerhalb eines vorgegebenen Toleranzbereichs liegt,

- wobei das zuletzt gültige Normalzeitsignal $t_E$ der Ungleichung

$$t_{DCF} > t_E$$

genügen muß, und

- wobei für den Vergleich der aktuellen externen Normalzeit $t_{DCF}$ mit der internen aktuellen Zeit $t_A$ die folgende Ungleichung gelten muß:

$$t_{DCF} - t_A < |T * (t_A - t_E)|,$$

wobei T die Toleranz der internen Uhr bedeutet.

d) Verschlüsseln der zeitgestempelten digitalen Daten.

3. Verfahren nach Anspruch 2, **dadurch gekennzeichnet,** daß ein Signat der zeitzustempelnden digitalen Daten erstellt wird, wobei das Signat zeitgestempelt und anschließend verschlüsselt wird.

4. Verfahren nach einem der vorangegangenen Ansprüche, **dadurch gekennzeichnet,** daß als externes Funk- oder Kabelsignal das Funkuhrsignal DCF77 der Physikalisch-Technischen Bundesanstalt oder das Funkuhrsignal eines anderen Zeitsenders verwendet wird.

5. Verfahren nach einem der Ansprüche 1-3, **dadurch gekennzeichnet,** daß das externe Funk- oder Kabelsignal von einem unabhängigen Sender erfolgt, wobei das externe Funk- oder Kabelsignal einen Authentisierungscode enthält, der den Sender hinreichend identifiziert.

6. Verfahren nach Anspruch 5, **dadurch gekennzeichnet,** daß das externe Funk- oder Kabelsignal in verschlüsselter Form gesendet wird.

7. Verfahren nach Anspruch 5 oder 6, **dadurch gekennzeichnet,** daß das externe Funk- oder Kabelsignal zu einem Zeitpunkt gesendet oder empfangen wird, der selbst Teil der Verschlüsselung ist.

8. Verfahren nach einem der Ansprüche 5 - 7, **dadurch gekennzeichnet,** daß das externe Funk- oder Kabelsignal wahre und falsche Informationen enthält.

9. Verfahren nach einem der vorangegangenen Ansprüche, **dadurch gekennzeichnet,** daß das externe Funk- oder Kabelsignal Informationen enthält, aus denen sich der Empfangsort bestimmen läßt.

10. Verfahren nach einem der vorangegangenen Ansprüche, **dadurch gekennzeichnet,** daß das externe Funk- oder Kabelsignal ein GPS-Signal ist.

11. Vorrichtung zum Erstellen eines Zeitstempels für digitale Daten, die aufweist:

- einen Empfänger zum Empfangen und Auswerten eines externen Funk- oder Kabelsignals einer externen Zeitquelle, aus dem sich die Normalzeit $t_{DCF}$ ableiten läßt,

- eine interne Uhr zum Erzeugen eines internen Zeitsignals $t_A$,

- einen Vergleicher zum Vergleichen der ermittelten externen Normalzeit $t_{DCF}$ mit der internen Zeit $t_A$,

- einen Speicher, der ein zuletzt gültiges Normalzeitsignal $t_E$ enthält, und
- ein Mittel zum Zeitstempeln der digitalen Daten falls die Zeitdifferenz zwischen internem und externem Normalzeitsignal innerhalb eines vorgegebenen Toleranzbereichs liegt,

wobei das zuletzt gültige Normalzeitsignal $t_E$ der Ungleichung

$$t_{DCF} > t_E$$

genügen muß, und
wobei für den Vergleich der aktuellen externen Normalzeit $t_{DCF}$ mit der internen aktuellen Zeit $t_A$ die folgende Ungleichung gelten muß:

$$t_{DCF} - t_A < |T * (t_A - t_E)|,$$

wobei T die Toleranz der internen Uhr bedeutet.

**12.** Vorrichtung zum Versiegeln digitaler Daten, die aufweist:

- einen Empfänger zum Empfangen und Auswerten eines externen Funk- oder Kabelsignals einer externen Zeitquelle, aus dem sich die Normalzeit $t_{DCF}$ ableiten läßt,
- eine interne Uhr zum Erzeugen eines internen Zeitsignals $t_A$,
- einen Vergleicher zum Vergleichen der ermittelten externen Normalzeit $t_{DCF}$ mit der internen Zeit $t_A$,
- einen Speicher, der ein zuletzt gültiges Normalzeitsignal $t_E$ enthält,
- ein Mittel zum Zeitstempeln der digitalen Daten falls die Zeitdifferenz zwischen internem und externem Normalzeitsignal innerhalb eines vorgegebenen Toleranzbereichs liegt, wobei das zuletzt gültige Normalzeitsignal $t_E$ der Ungleichung

$$t_{DCF} > t_E$$

genügen muß, und
wobei für den Vergleich der aktuellen externen Normalzeit $t_{DCF}$ mit der internen aktuellen Zeit $t_A$ die folgende Ungleichung gelten muß:

$$t_{DCF} - t_A < |T * (t_A - t_E)|,$$

wobei T die Toleranz der internen Uhr bedeutet, und

- ein Mittel zum Verschlüsseln der zeitgestempelten digitalen Daten.

**13.** Vorrichtung nach einem der Ansprüche 11 oder 12, **dadurch gekennzeichnet,** daß nach einer positiven Auswertung des Vergleichs die Normalzeit $t_{DCF}$ als das zuletzt gültige Zeitsignal $t_E$ im Speicher gespeichert wird und die interne Echtzeituhr aktualisiert wird.

**14.** Vorrichtung nach Anspruch 12 oder 13, **dadurch gekennzeichnet,** daß die Vorrichtung ein Mittel zum Erstellen eines Signats der zeitzustempelnden digitalen Daten aufweist, wobei das Signat zeitgestempelt und verschlüsselt wird.

**15.** Vorrichtung nach einem der Ansprüche 11 bis 14, **dadurch gekennzeichnet**, daß die Vorrichtung eine Authentisierungsvorrichtung aufweist.

**16.** Vorrichtung nach einem der Ansprüche 11 bis 15, **dadurch gekennzeichnet,** daß die Vorrichtung mit einer Identifikationsnummer versehen ist, die in den Verschlüsselungsvorgang eingebunden ist.

**17.** Vorrichtung nach einem der Ansprüche 11 bis 16, **dadurch gekennzeichnet,** daß die Signalverarbeitung in der Vorrichtung durch Mikroprozessorbausteine durchgeführt wird.

**18.** Vorrichtung nach einem der Ansprüche 11 bis 17, **dadurch gekennzeichnet,** daß die Vorrichtung gegen ein Heruntertakten geschützt ist.

**19.** Vorrichtung nach einem der Ansprüche 11 bis 18, **dadurch gekennzeichnet,** daß die Vorrichtung mit ihren Bauelementen eingegossen und mit einer elektromechanischen Kopplungstechnik versehen ist.

**20.** Vorrichtung nach einem der Ansprüche 11 bis 19, **dadurch gekennzeichnet,** daß die Vorrichtung sich auf einer Computerhauptplatine oder innerhalb eines DFÜ-tauglichen Geräts befindet.

**21.** Vorrichtung nach einem der Ansprüche 11 bis 19, **dadurch gekennzeichnet,** daß die Vorrichtung als PC-Einsteckkarte oder Zusatzplatine realisiert ist.

**Claims**

**1.** A method of preparing a time stamp for digital data comprising the following steps:

a) Receiving and evaluating an external broadcast or cable signal from an external time source from which the standard time $t_{DCF}$ can be derived,

b) Comparing the standard time $t_{DCF}$ obtained in a) with an internal actual time signal $t_A$ from an internal clock,

c) Time-stamping the digital data if the difference between the internal and the external time signal is within a preset tolerance range,

- wherein the latest valid standard time signal $t_E$ must satisfy the inequality

$$t_{DCF} > t_E,$$

and

- wherein the following inequality must apply for comparison of the actual external standard time $t_{DCF}$ with the actual internal time $t_A$:

$$t_{DCF} - t_A < |T * (t_A - t_E)|,$$

wherein T denotes the tolerance of the internal clock.

2. A method of sealing digital data comprising the following steps:

a) Receiving and evaluating an external broadcast or cable signal from an external time source from which the standard time $t_{DCF}$ can be derived,

b) Comparing the standard time $t_{DCF}$ obtained in a) with an internal actual time signal tA from an internal clock,

c) Time-stamping the digital data if the difference between the internal and the external time signal is within a preset tolerance range,

- wherein the latest valid standard time signal $t_E$ must satisfy the inequality

$$t_{DCF} > t_E,$$

and

- wherein the following inequality must apply for comparison of the actual external standard time $t_{DCF}$ with the actual internal time $t_A$:

$$t_{DCF} - t_A < |T * (t_A - t_E)|,$$

wherein T denotes the tolerance of the internal clock, and

d) Coding the time-stamped digital data.

3. A method according to claim 2, characterised in that a signature for the digital data for time-stamping is obtained, the signature being time-stamped and subsequently coded.

4. A method according to any of the preceding claims, characterised in that the external broadcast or cable signal is the broadcast clock signal DCF77 of the Physikalisch-Technischen Bundesanstalt or the broadcast clock signal from another time transmitter.

5. A method according to any of claims 1 to 3, characterised in that the external broadcast or cable signal is from an independent transmitter, wherein the external broadcast or cable signal contains an authenticating code which sufficiently identifies the transmitter.

6. A method according to claim 5, characterised in that the external broadcast or cable signal is transmitted in coded form.

7. A method according to claim 5 or 6, characterised in that external broadcast or cable signal is transmitted or received at a time which itself is a part of the coding.

8. A method according to any of claims 5 - 7, characterised in that the external broadcast or cable signal contains true and false information.

9. A method according to any of the preceding claims, characterised in that the external broadcast or cable signal contains information from which the place of reception can be determined.

10. A method according to any of the preceding claims, characterised in that the external broadcast or cable signal is a GPS signal.

11. Apparatus for preparing a time stamp for digital data comprising:

- A receiver for receiving and evaluating an external broadcast or cable signal from an external time source from which the standard time $t_{DCF}$ can be derived,

- An internal clock for generating an internal time signal $t_A$,

- A comparator for comparing the obtained external standard time $t_{DCF}$ with the internal time $t_A$,

- A memory containing a latest valid standard time signal $t_E$ and

- A means for time-stamping the digital data if the difference between the internal and the external standard time signal is within a preset tolerance range,

    wherein the latest valid standard-time signal $t_E$ must satisfy the inequality

$$t_{DCF} > t_E$$

and wherein the following inequality must apply for comparison of the actual external standard time $t_{DCF}$ with the actual internal time $t_A$:

$$t_{DCF} - t_A < |T * (t_A - t_E)|,$$

wherein T denotes the tolerance of the internal clock.

12. Apparatus for sealing digital data comprising

- A receiver for receiving and evaluating an external broadcast or cable signal from an external time source from which the standard time $t_{DCF}$ can be derived,

- An internal clock for generating an internal time signal $t_A$,

- A comparator for comparing the obtained external standard time $t_{DCF}$ with the internal time $t_A$,

- A memory containing a latest valid standard time signal $t_E$ and

- A means for time-stamping the digital data if the difference between the internal and the external standard time signal is within a preset tolerance range,

    wherein the latest valid standard-time signal $t_E$ must satisfy the inequality

$$t_{DCF} > t_E$$

and wherein the following inequality must apply for comparison of the actual external standard time $t_{DCF}$ with the actual internal time $t_A$:

$$t_{DCF} - t_A < |T * (t_A - t_E)|,$$

wherein T denotes the tolerance of the internal clock,
and
a means for coding the time stamped digital data.

13. Apparatus according to claim 11 or 12, characterised in that after positive evaluation of the comparison, the latest valid time signal $t_E$ in the form of the standard time $t_{DCF}$ is stored in the memory and the internal real-time clock is updated.

14. Apparatus according to claim 12 or 13, characterised in that the apparatus comprises a means for preparing a signature for the digital data to be time stamped, wherein the signature is time-stamped and coded.

15. Apparatus according to any of claims 11 to 14, characterised in that the apparatus comprises an authenticating device.

16. Apparatus according to any of claims 11 to 15, characterised in that the apparatus has an identification number which is incorporated in the coding process.

17. Apparatus according to any of claims 11 to 16, characterised in that signal processing in the apparatus is performed by microprocessor components.

18. Apparatus according to any of claims 11 to 17, characterised in that the apparatus is protected against clocking-down.

19. Apparatus according to any of claims 11 to 18, characterised in that the apparatus is integrally cast with its components and is provided with an electromechanical coupling technique.

20. Apparatus according to any of claims 11 to 19, characterised in that the apparatus is disposed on a main computer circuit board or inside a means that can be used for remote data transmission.

21. Apparatus according to any of claims 11 to 19, characterised in that the apparatus is in the form of a PC plug-in card or additional circuit board.

**Revendications**

1.  Procédé pour établir une marque temporelle pour des données numériques, qui comprend les étapes suivantes :

    a) réception et exploitation d'un signal externe, transmis par radio ou par câble, d'une source externe de temps, à partir de laquelle on peut obtenir le temps normal $t_{DCF}$,
    b) comparaison du temps normal $t_{DCF}$ déterminé en a) à un signal interne actuel de temps $t_A$ d'une horloge interne,
    c) marquage temporel des données numériques, dans le cas où l'intervalle de temps entre le signal de temps interne et le signal de temps externe se situe à l'intérieur d'une gamme prédéterminée de tolérance,

    -   le signal de temps normal $t_E$ valable en dernier lieu devant satisfaire à l'inégalité

    $$t_{DCF} > t_E$$

    et
    -   l'inégalité suivante devant être valable pour la comparaison du temps normal actuel externe $t_{DCF}$ au temps normal actuel interne $t_A$ :

    $$t_{DCF} - t_A < |T * (t_A - t_E)|,$$

    T désignant la tolérance de l'horloge interne.

2.  Procédé pour sceller des données numériques, qui comprend les étapes suivantes :

    a) réception et exploitation d'un signal externe, transmis par radio ou par câble, d'une source externe de temps, à partir de laquelle on peut obtenir le temps normal $t_{DCF}$,
    b) comparaison du temps normal $t_{DCF}$ déterminé en a) à un signal interne actuel de temps $t_A$ d'une horloge interne,
    c) marquage temporel des données numériques, dans le cas où l'intervalle de temps entre le signal de temps interne et le signal de temps externe se situe à l'intérieur d'une gamme prédéterminée de tolérance,

    -   le signal de temps normal $t_E$ valable en dernier lieu devant satisfaire à l'inégalité

    $$t_{DCF} > t_E$$

    et

    -   l'inégalité suivante devant être valable pour la comparaison du temps normal actuel externe $t_{DCF}$ au temps normal actuel interne $t_A$ :

    $$t_{DCF} - t_A < |T * (t_A - t_E)|,$$

    T désignant la tolérance de l'horloge interne,

    d) codage des données numériques marquées temporellement.

3.  Procédé selon la revendication 2, caractérisé en ce qu'un signal des données numériques devant être marquées temporellement est établi, le signal étant marqué temporellement, puis codé.

4.  Procédé selon l'une des revendications précédentes, caractérisé en ce qu'on utilise comme signal externe transmis par radio ou par câble le signal d'horloge radio DCF77 du ministère fédéral allemand Physikalisch-Technischer Bundesanstalt ou le signal d'horloge radio d'un autre émetteur de temps.

5.  Procédé selon l'une des revendications 1-3, caractérisé en ce que l'émission du signal externe transmis par radio ou par câble est réalisée par un émetteur indépendant, le signal externe transmis par radio ou par câble contenant un code d'authentification, qui identifie d'une manière suffisante l'émetteur.

6.  Procédé selon la revendication 5, caractérisé en ce que le signal externe transmis par radio ou par câble est émis sous forme codée.

7.  Procédé selon la revendication 5 ou 6, caractérisé en ce que le signal externe transmis par radio ou par câble est émis ou reçu à un instant qui fait lui-même partie du codage.

8.  Procédé selon l'une des revendications 1-7, caractérisé en ce que le signal externe transmis par radio ou par câble contient des informations vraies et fausses.

9.  Procédé selon l'une des revendications précédentes, caractérisé en ce que le signal externe transmis par radio ou par câble contient des informations, à partir desquelles le lieu de réception peut être déterminé.

10. Procédé selon l'une des revendications précédentes, caractérisé en ce que le signal externe transmis par radio ou par câble est un signal GPS.

**11.** Dispositif pour établir une marque temporelle pour des données numériques, qui comporte :

- un récepteur pour recevoir et exploiter un signal externe transmis par radio ou par câble, d'une source de temps externe, à partir de laquelle le temps normal $t_{DCF}$ peut être obtenu,
- une horloge interne pour produire un signal de temps interne $t_A$,
- un comparateur pour comparer le temps normal externe déterminé $t_{DCS}$ au temps interne $t_A$,
- une mémoire, qui contient un signal de temps normal $t_E$ valable en dernier lieu, et
- un moyen de marquage temporel des données numériques dans le cas où l'intervalle de temps entre le signal de temps interne et le signal de temps externe se situe à l'intérieur d'une gamme prédéterminée de tolérance,
- le signal de temps normal $t_E$ valable en dernier lieu devant satisfaire à l'inégalité

$$t_{DCF} > t_E$$

et

- l'inégalité suivante devant être valable pour la comparaison du temps normal actuel externe $t_{DCF}$ au temps normal actuel interne $t_A$ :

$$t_{DCF} - t_A < |T * (t_A - t_E)|,$$

T désignant la tolérance de l'horloge interne.

**12.** Dispositif pour sceller des données numériques, qui comporte :

- un récepteur pour recevoir et exploiter un signal externe transmis par radio ou par câble, d'une source de temps externe, à partir de laquelle le temps normal $t_{DCF}$ peut être obtenu,
- une horloge interne pour produire un signal de temps interne $t_A$,
- un comparateur pour comparer le temps normal externe déterminé $t_{DCS}$ au temps interne $t_A$,
- une mémoire, qui contient un signal de temps normal $t_E$ valable en dernier lieu, et
- un moyen de marquage temporel des données numériques dans le cas où l'intervalle de temps entre le signal de temps interne et le signal de temps externe se situe à l'intérieur d'une gamme prédéterminée de tolérance,
- le signal de temps normal $t_E$ valable en dernier lieu devant satisfaire à l'inégalité

$$t_{DCF} > T_E$$

et

- l'inégalité suivante devant être valable pour la comparaison du temps normal actuel externe $t_{DCF}$ au temps normal actuel interne $t_A$ :

$$t_{DCF} - t_A < |T * (t_A - t_E)|,$$

T désignant la tolérance de l'horloge interne,

- un moyen pour coder les données numériques marquées temporellement.

**13.** Dispositif selon l'une des revendications 11 ou 12, caractérisé en ce qu'après une exploitation positive de la comparaison, le temps normal $t_{DCF}$ est mémorisé dans la mémoire en tant que signal de temps $t_E$ valable en dernier lieu, et l'horloge en temps réel est actualisée.

**14.** Dispositif selon la revendication 12 ou 13, caractérisé en ce que le dispositif comporte un moyen pour établir un signal des données numériques devant être marquées temporellement, le signal étant marqué temporellement et codé.

**15.** Dispositif selon l'une des revendications 11 à 14, caractérisé en ce que le dispositif comporte un dispositif d'authentification.

**16.** Dispositif selon l'une des revendications 11 à 15, caractérisé en ce que le dispositif comporte un numéro d'identification, qui est inséré lors du processus de codage.

**17.** Dispositif selon l'une des revendications 11 à 16, caractérisé en ce que le traitement du signal dans le dispositif est exécuté à l'aide des modules de microprocesseurs.

**18.** Dispositif selon l'une des revendications 11 à 17, caractérisé en ce que le dispositif est protégé vis-à-vis d'une réduction du cadencement.

**19.** Dispositif selon l'une des revendications il à 18, caractérisé en ce que le dispositif équipé de ses composants est encapsulé et est pourvu d'un système de couplage électromécanique.

**20.** Dispositif selon l'une des revendications 11 à 19, caractérisé en ce que le dispositif est situé sur une platine principale d'ordinateur ou à l'intérieur d'un appareil exécutant une télétransmission de données.

**21.** Dispositif selon l'une des revendications 11 à 19,

**EP 0 848 872 B1**

caractérisé en ce que le dispositif est réalisé sous la forme d'une carte enfichable d'ordinateur PC ou sous la forme d'une platine supplémentaire.

## FIG. 1

Stationär
PC, Fax, Telex, Handy u.a.

Transport
DFÜ

Stationär
PC, Fax, Telex, Handy u.a

Datei
Inhalt: abc

Datei
Inhalt: abc

Datei
Inhalt: abc

Normalzeit

Verschlüsselung

Identifikation

Entschlüsselung
mit Manipulationsüberprüfung
und Authentisierungkontrolle

Datei
Inhalt: ✤✗✖◆

Datei
Inhalt: ✤✗✖◆

Datei
Inhalt: ✤✗✖◆

EP 0 848 872 B1

FIG. 2

```
                              ┌─────────────────────┐
                              │     Vorrichtung     │
                              └─────────────────────┘
                    ┌──────────────────┴──────────────────┐
          ┌───────────────────┐              ┌───────────────────┐
          │     Stationär     │              │       DFÜ         │
          └───────────────────┘              └───────────────────┘
                    │                                  │
          ┌───────────────────┐              ┌───────────────────┐
          │ PC, Notebook, u.a.│              │ Fax, Modem, u.a.  │
          └───────────────────┘              └───────────────────┘
                    │                                  │
```

| Nach-rüstung | Ausführungsbeispiel Einsteckkarte | Ausführungsbeispiel Zusatzplatine |
|---|---|---|
| Neugeräte (stückzahlabhängig) | ASIC | ASIC |

EP 0 848 872 B1

FIG. 3

**FIG. 4**

FIG. 5

Funkuhr-Sender
Normalzeit
über z.B. DCF77

Funkuhr-Empfänger

serielles Taktsignal

PC-Einsteckkarte mit:
- Mikrocontroller
- EPROM
- EEPROM
- Logikschaltung (GAL, PAL, ASIC ...)
- Codierer
- Bustreiber

Kartenleser

Software

Datei
Inhalt: abc

Datei
Inhalt: ✝✳⌘◆

FIG. 6

**Empfänger**

**DCF77 Signal $t_{DCF}$**

| Microcontroller-Baustein | Folgende Bedingungen müssen erfüllt sein: |
|---|---|
| **EEPROM** enthält letztes gültiges Funkuhrsignal $t_E$ | $t_{DCF} > t_E$ |
| **ECHTZEITUHR** enthält aktuelle Zeit $t_A$ mit Toleranz T (z.B. 1 sec/Monat) | $t_{DCF} - t_A < \mid T \cdot (t_A - t_E) \mid$ |

**DCF77 Signal $t_{DCF}$ Auswertung positiv** → **Aktualisierung der Echtzeituhr**

FIG. 7

Orginal

z.B.:
demo.txt

Erzeugen eines 4kByte Blockes
mit Signatur des Orginals
und TSTC-Headerinfo
und Anfang der Datei

demo.txt

Software
fügt den
4kByte Block
zum Orginal dazu

PC-Bus

DES-Chip und
Symmetrische Signatur

Validität des DCF77
durch vgl. mit Echtzeituhr
und t(neu)>t(alt).

Begrenzung auf n-Versuche

Black Box

Transponder

Chipkarten
Leser/Schreiber

DCF 77
(GPS)

Tastenfeld
(oder Tastatur)

Motherboardaktivierung
(z.B. Span.-Vers.)

Verschlüsseln mit
PGP, IDEA, RSA

FIG. 8

21

**Sender, Kabel**
enthält Normalzeit und ggf.
weitere Informationen

Codierung
Decodierung

Codierung

Codierung
Decodierung

**Decodierung,**
**Archivierung,**
**Ausdruck**
falls berechtigt

Codiertes DFÜ-Signal

FIG. 9